# EUROPEAN PATENT APPLICATION

(11) **EP 4 382 305 A1**
(43) Date of publication of application: **12.06.2024**
(21) Application number: 22211296.3
(22) Date of filing: 05.12.2022
(51) Int. Cl.: B41J 11/00, B44C 3/02, C09D 11/02, B29C 64/112, B41M 7/00

(54) **INKJET PRINTING OF HAPTIC STRUCTURES**

(71) Applicant: Canon Production Printing Holding B.V., 5914 HH Venlo (NL)
(72) Inventor: VAN DER ASDONK, Pim, Venlo (NL)
(74) Representative: Canon Production Printing IP Department

(57) **Abstract**

A method of inkjet printing a haptic surface on a print medium (9), the method comprising the steps of:
- depositing radiation curable marking material on a surface, such that an array of spaced apart drops is formed;
- curing said spaced apart drops by irradiating the drops ;
- forming the drops into a plurality of spaced apart, out-of-plane structures (S) by repeatedly depositing a further drop of radiation curable marking material on each drop and curing the further drops, thereby adhering the further drops to the drop, wherein each repetition increases a height of the structures (S) with respect to the plane.

## Description

### BACKGROUND OF THE INVENTION

### 1. Field of the invention

The invention relates to a method of inkjet printing a haptic surface on a print medium, a scanning inkjet printer, and a computer program.

### 2. Description of Background Art

It is known from e.g. US 10281904 B2 to print three-dimensional structure using a scanning inkjet printer. Such a scanning inkjet printer comprises a printhead carriage comprising at least one printhead for jetting onto a print medium on a medium support surface. The printhead carriage is reciprocally translatable over the medium support surface in a scanning direction, which is perpendicular to a transport direction, wherein the print medium is moved with respect to a support beam along which the printhead carriage translates. The latter may be achieved by moving the print medium and/or the support beam in the transport direction. The printhead is configured to jet marking material, such as ink (colored or colorless), specifically a radiation curable ink. The radiation curable ink is jetted from nozzles on the printhead in the form of liquid droplets. A curing station, such an optical emitter, is provided for curing the droplets. The curing station emits light at least within a predetermined range determined by the marking material, thereby inducing a chemical reaction within one or more components in the marking material, causing the marking material to harden and become fixed onto the print medium. Three-dimensional structures are formed by repeatedly and selectively depositing layers of marking material on top of one another. Each layer is generally cured before adding another on top of it. Thus a hard and/or rigid three-dimensional print can be created.

### SUMMARY OF THE INVENTION

It is an object of the invention to provide an alternative method of printing three-dimensional structure, specifically one suited for forming haptic structures on a print medium.

In accordance with the present invention, a method of printing according to claim 1, a scanning inkjet printer according to claim 13, and a computer program according to claim 14 are provided.

This method of inkjet printing allows for printing a haptic surface on a print medium. The method comprises the steps of :
- depositing radiation curable marking material on a surface, such that an array of spaced apart drops is formed;
- curing said spaced apart drops by irradiating the drops ;
- forming the drops into a plurality of spaced apart, out-of-plane structures by repeatedly depositing a further drop of radiation curable marking material on each drop and curing the further drops, thereby adhering the further drops to the drop, wherein each repetition increases a height of the structures with respect to the surface.

It is the insight of the inventor that iteratively depositing drops in a spaced apart formation on top of one another and curing said drops before adding a subsequent drop may result in the formation of pillar-shaped and/or fiber-like structures. It is the further insight of the inventor that the longitudinal geometry of these structures allows these structures to be bent and to spring back to their original shape after pressing and releasing. These structures are created by repeatedly depositing drops on top of one another and curing the drops in between depositions, while ensuring that the different structures do not come into contact with one another. Thus an array of structures that are longitudinal along an out-of-plane direction of the print medium are formed. The longitudinal structure allows the structures to deformably and elastically bend. Thereby, a haptic surface is formed that responds to the touch by deforming and elastically veering back. Thereby the object of the present invention has been achieved.

More specific optional features of the invention are indicated in the dependent claims.

In an embodiment, the step of curing comprises irradiating the marking material by emitting and/or exposing the material to light within a predetermined wave length range, such that the absorption of the light causes a photochemical reaction in the marking material, which causes the marking material to harden, preferably to change the liquid marking material into a solid. It will be appreciated that liquid herein may include a liquid gel state.

In an embodiment, each further drop is deposited and cured on a previous drop, preferably on top of a previously cured drop, such that a majority, and preferably all of the marking material of the further drop is adhered on top of the previous drop. Each structure is built up drop by drop. Each drop comprises at least one droplet of marking material jetted from the printhead. After a drop has been deposited on a structure-in-formation, that drop is cured before a further dop is added on top of it. The drop is cured before a substantial portion of the drop has been able to glide down the top of the structure-in-formation. Thereby, it is ensured that all or the majority of the volume of the drop is added to the top of the structure-in-formation. This facilitates a rapid formation of the structures and contributes to the longitudinal geometry of the structures.

In an embodiment, upon completion the structure has a height with respect to the plane, which height is at least multiple times, preferably at least ten times, greater than a cross-sectional width of the structure taken parallel to the plane, and preferably wherein the height is at least multiple times, preferably at least ten times, a square root of a cross-sectional area of the structure parallel to the plane. The structures are longitudinal, i.e. the out-of-plane height of a completed structure is significantly greater than an in-plane width. When viewed along at least one direction parallel to the plane, the structure has a narrow shape. In that view, the structure appears as a needle, pillar, or fiber. It will be appreciated that the structures may (slightly) tapered away from the print medium. The structure may also be shaped as a wall with a length extending in another direction parallel to the plane of the print medium. Preferably, each structure is narrow when viewed along any direction parallel to the plane. Any cross-section taken parallel to the plane is preferably at least an order of magnitude smaller than the height of the structure. This thin structure ensures the elasticity of the structure in any direction, which creates the haptic sensation when pressing onto a surface covered with said structures. In a preferred embodiment, a diameter or cross-sectional width of the completed structures is between 10 µm and 1 mm, preferably between 25 µm and 0.5 mm, very preferably between 10 µm and 250 µm, and even more preferably between 10 µm and 100 µm. It will be appreciated that the structure may have different cross-sections in different in-plane directions parallel to the print medium, so that different haptic sensations is different directions can be achieved.

In an embodiment, upon completion each structure is a pillar formed by drops stacked on top of another, wherein each pillar is positioned substantially free from other pillars. Each drop was cured to its underlying portion of the structure without any or a substantial portion of the drop flowing downwards along the structure. Thus the majority of each drop is added on top of a previous drop and then cured, thereby creating a stack of hardened drops. Each structure thus has a pillar shape, e.g. in the form of a line, a needle, or a straw. The cross-section of a structure is preferably substantially constant, but may taper to some degree dependent on printing conditions. The majority of neighboring structures are positioned at some distance from one another in a contactless distribution, such that each structure has space to be bent when pressed by e.g. a finger. The distance is preferably at least an average cross-sectional width of the structures, very preferably at least two or even more preferably at least five time said width. It will be appreciated that a haptic surface is formed by large numbers of such structures and that in practice due to deviations in e.g. printing conditions a small number of structures may deviate in position, shape, etc.

In an embodiment, the radiation curable marking material comprises a gellant, which provides sufficient viscosity to the drops to allow an uncured further drop to be positioned on a previous drop without a majority of the marking material of the further drop flowing down onto and/or past the previous drop. The viscosity of a gellant can be controlled by controlling its temperature, so that at the moment of landing the marking material has the desired, high viscosity. The marking material is preferably relatively viscous to ensure that an uncured drop remains stably on top of its respective structure-in-formation until it is fixed there by means of curing the drop by exposure to radiation. Gel-based marking materials, commonly referred to as 'gel inks', generally have a relatively high viscosity, at least after having been cooled down after landing on the print medium. In a preferred embodiment, the marking material applied comprises a gellant or (the gelling agent) which comprises molecules with a weight-averaged molecular weight of less than 5000, in particular less than 1000, preferably less than 500. The addition of a small quantity of well known high-molecular gellants such as carragenan, laminarane, pectin and gums such as arabic, xanthane and guar gums may lead to an unacceptably high viscosity at the jetting temperature of the ink (i.e. the operating temperature of the print head), which means that there is an adverse effect on the jetting properties of the ink. Oligomer gellants, i.e. gelling agents with a molecular weight less than 5000 are therefore preferably used, so that the gellant does not have an adverse effect on the viscosity of the ink composition. In a further preferred embodiment, low-molecular gellants are used, i.e. gelling agents with a molecular weight less than 1,000 or even 500. The fact that these oligomer and low-molecular compounds can have gelling properties despite their relatively low molecular weight can be explained as follows. In the case of oligomer and low-molecular gellants, the molecules of this agent are believed to separate from the carrier composition on an adequate reduction of the temperature, and form long compound chains via mutual (typical non-covalent) interactions, said chains possibly behaving in the same way as the high-molecular polymers in the previously mentioned well known gellants. When the gel is heated up, the interactions between the molecules of the gellants are interrupted and a solution (here-after also called sol) re-forms. A supplementary advantage of the use of oligomer and low molecular gellants is that the gel-sol transition takes place relatively quickly, because for this transition it is only necessary to break the relatively weak non-covalent bonds between the compound molecules of the polymer chains. In addition, small molecules will solve homogeneously in their carrier composition more rapidly. In another embodiment the marking material comprises less than 10%, preferably less than 5% by weight of the gellant. This has the advantage that the gellant itself is of less influence on the properties, in particular the mechanical properties, of the ultimately cured ink. This is even stronger the case when the gellant is radiation curable itself. Such gel-based inks are commercially known and available, for example e.g. 'Canon UV gel ink 460' as available in the year 2021 and/or 2022, in any of the color cyan, yellow, magenta, black, and/or white. Preferably, the marking materials further comprise at least one acrylic component. Acrylics are commonly known materials for combining with colorants for forming a printing ink.

In an embodiment, the marking material further comprises an UV-initiator and a colorant, and wherein the curing step comprises irradiating the drops with UV-radiation. UV-curing starts off with initiating a reaction by the emission of light in the ultraviolet spectrum. A UV-initiator (also known as a photoinitiating agent) absorbs the UV-light which causes e.g. the formation of radicals or ions. UV-initiators commonly used with these compounds are Esacure 1187 and Chivacure 1172. Many photosensitisers are known for these initiators and can be found i.a. among the anthracene-, xanthone-, thiazine-, acridine-, and porphorine-derivates. Particular compounds are for example 1,6 diphenyl-1,3,5 hexatriene, pyrene and perylene. Colorants are commercially available as pigments.

In an embodiment, the step of forming the drops comprising jetting at least one droplet of UV curable marking material from a nozzle of a printhead, and wherein the method further comprises the step of positioning a nozzle of a printhead with respect to a to be formed structure, such that a nozzle is in a similar and/or the same jetting position with respect to the to be formed structure every time a droplet from a nozzle is jetted onto the respective to be formed structure. For each droplet being jetting onto a specific structure, the respective nozzle is in the same position with respect to the position where said droplet is to land. At the moment of jetting a distance vector between the intended landing position of the droplet on the structure-in-formation and/or the print medium and the applied nozzle is always (substantially) same. In one example, the same nozzle is used for every droplet deposited onto a specific structure, though in a more complex example a single structure may be formed using multiple nozzles. In another basic example, in top-down view the nozzle has the same position with respect to the position of a structure every time a droplet is added to said structure at the moment of jetting the droplet. In a more advanced embodiment, the growing height of the structure may taken into account, such that a three-dimensional distance vector between the nozzle at the time of jetting and the position of the top of the structure is kept constant each time a droplet is released from said nozzle for addition to said structure. In an embodiment, the respective nozzle further has a similar and/or the same velocity and moving direction with respect to the to be formed structure every time a droplet from said nozzle is jetted onto the to be formed structure. Preferably, in case a scanning printhead is applied, the velocity, preferably the velocity vector, of the printhead is the same and/or constant when jetting a droplet onto a structure. Preferably, the same distance vector and/or velocity is applied for all nozzles with respect to their respective structure, though the velocities and/or distance may be varied between structures and/or nozzles as well.

In an embodiment, the method further comprises the step of scanning the printhead iteratively over the print medium, wherein the step of curing comprises irradiating the drops when the printhead has moved away from the drops. At the moment of jetting, the printhead may be positioned over a portion of the structures, preventing the curing station from properly irradiating said portion. The curing station is preferably configured to irradiate the jetted marking material immediately or swiftly following the printhead and/or printhead carriage leaving the area where the marking material was jetted. In one example, a curing station is provided on the trailing side of the printhead or printhead carriage or the curing station is configured to move following and/or adjacent the printhead or printhead carriage.

In an embodiment, a volume of each individual droplet is less than 100 pl, preferably less than 50, and very preferably less than 20 pl. The droplets are preferably sufficiently small to form a narrow structure. A structure formed of stacked, small droplets has sufficiently elasticity to form a reversibly deformable structure. In another embodiment, all droplets preferably have the same volume. Preferably, these droplets with similar volumes are jetted from their respective nozzle with the same relative velocity and position of their respective nozzle with respect to the droplet's intended landing position on the print medium and/or structures-in-formation. Thereby, each structure is consistently built up in substantially identical steps, so that a substantial uniform structure is created.

In an embodiment, a time between jetting a droplet and curing said droplet is less than 1 s, preferably less than 0.5 s, very preferably less than 250 ms, and even more preferably less than 150 ms. To fix the droplets on top of a structure-in-formation, the droplets are preferably cured quickly after landing on their respective structure-in-formation. This ensures that the entirety or majority of the volume of the droplet is adhered to the top of the structure-in-formation.

In an embodiment, the method further comprises the steps of:
- selecting a structure height parameter corresponding to a height of the structures after printing;
- comparing a droplet size parameter corresponding to a dimension of the be applied droplets to the structure height parameter to determine a number of passes;
- defining a number of masks at least equal to the number of passes of a scanning printhead, wherein each mask defines a plurality of spaced apart structure formation areas, wherein each structure formation area comprises at least one printing pixel and said structure formation area is, preferably entirely, surrounded by non-printing pixels, preferably wherein the masks are identical; and
- applying one of the mask per pass.

For printing haptic structures, a printer is preferably configured to operate in a haptic structure print mode, wherein haptic print job information is transmitted to a controller of the printer. The haptic print job information defines in any suitable format a structure height parameter, which reflects the intended height of the structure after printing. The controller further stores information regarding an average height of a single droplet or drop in a structure, so that by comparison the number of passes for forming a structure with a height corresponding to the structure height parameter may be formed. For every pass, a print mask is defined which comprises a plurality of printing pixels, which are spatially isolated and/or separated from one another by non-printing pixels, either individually or in small groups. A printing pixel corresponds to an area of the print medium where at least one droplet is to be jetted, whereas the non-printing pixels are kept free from marking material during the respective pass. The print mask is preferably defined, such that at the moment of jetting a distance between the position where the droplet is to land (i.e. the position of the structure-in-formation on the print medium) and the nozzle from which the droplet is jetted is constant for every respective droplet and its corresponding structure jetted during the process. This ensures that each droplet lands on its respective structure-in-formation. Each nozzle jets a droplet when it is positioned at the same distance vector with respect to the structure to which the droplet is to be added. Per pass of the printhead, the distance vector may be two-dimensional and measured parallel to the plane of the print medium or may be three-dimensional allowing for corrections in the nozzle's position to compensate for the increasing height of the structures. Additionally, it is preferred that the velocity of the nozzles and/or the printhead is constant during every pass and optionally for every pass. In a basic example, the same print mask is applied during each pass, optionally with, per one or more passes adjustments of the relatively height of the printhead to correct for the increasing height of the structures.

It will be appreciated that different marking materials may be applied during different stages of forming the structures. For example, a core of a structure may be first built during several passes wherein relatively large or multiple droplets of a marking material of a first color (for example white) deposited and cured per pass. Thereby, the structures can be formed relatively quickly. In the final pass or passes, a droplets of a further marking material are added to add for example a layer of a different color or other surface properties over the core of the structure. Thereby, haptic structures can be formed efficiently but with a variety of different properties, such as colors or surface structures. Aside from coloring, the cores may be provided in the final passes with a marking material that controls the surface interaction of the structures, to make these e.g. water repellant, anti-static, wear-resistant, smoother or rougher, etc.

The invention further relates to a print medium with a haptic surface formed by the above described method.

The invention further relates to a scanning inkjet printer comprising:
- a translatable printhead carriage translatable over a medium support surface and comprising at least one printhead comprising nozzles for jetting droplet of UV curable marking material onto a print medium on the medium support surface;
- a curing station configured for emitting UV radiation for curing marking material on the print medium on the medium support surface;
- a controller configured for operating in a haptic structure print mode to:
- define a plurality of spaced apart structure formation areas on the print medium with respect to the medium support plane;
- control the printhead to jet at least one droplet from the at least one nozzle onto each structure formation area during multiple passes of the printhead, wherein for every droplet jetted onto a structure formation area, the position, velocity, and moving direction are similar and/or the same, and to control the curing station to cure the jetted droplets during each pass of the printhead, such that in substantially each structure formation area a three-dimensional structure, the structures being spaced apart from one another and comprising a cross-sectional that is sufficiently small compared to their height to allow the structures to bend with respect to the print medium.

The printer is preferably configured to execute the above described method.

The invention further relates to a computer program comprising instructions which, when the program is executed by a computer, cause the computer to carry out the steps of the above described method. The computer program may be provided on a computer or computer readable medium, so that the method may be executed on the above mentioned printer.

Further scope of applicability of the present invention will become apparent from the detailed description given hereinafter. However, it should be understood that the detailed description and specific examples, while indicating preferred embodiments of the present invention, are given by way of illustration only, since various changes and modifications within the spirit and scope of the present invention will become apparent to those skilled in the art from this detailed description.

### BRIEF DESCRIPTION OF THE DRAWINGS

The present invention will become more fully understood from the detailed description given herein below and the accompanying drawings which are given by way of illustration only, and thus are not limitative of the present invention, and wherein:
Fig. 1 is a schematic representation of a scanning inkjet printer;
Figs. 2A to 2F illustrate different steps of a method of printing haptic structures;
Fig. 3 is a schematic, side view of a structure printed via the method in Figs. 2A to 2F;
Fig. 4 is a first embodiment of a print mask that may be applied in the method in Figs. 2A to 2F;
Fig. 5 is a second embodiment of a print mask that may be applied in the method in Figs. 2A to 2F;
Fig. 6 is a scanning electron microscopic image of structures printed using the method in Figs. 2A to 2F;
Figs. 7 to 9 are schematic representation to illustrate the timing of jetting droplets to form haptic structures by means of the method illustrated in Figs. 2A- to 2F.

### DETAILED DESCRIPTION OF THE PREFERRED EMBODIMENTS

The present invention will now be described with reference to the accompanying drawings, wherein the same reference numerals have been used to identify the same or similar elements throughout the several views.

### Printing system

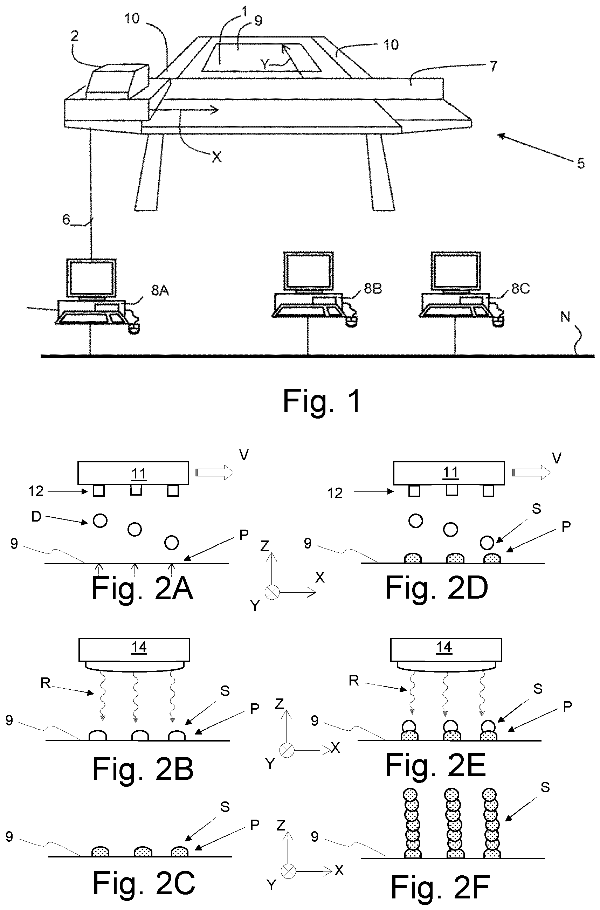

Fig. 1 is a print system comprising a number of workstations 8B and 8C, which may be personal computers or other devices for preparing colour image data for three dimensional objects to be printed. These workstations have access to a network N for transferring the colour image data to a print controller 8A that is configured to receive print jobs for three-dimensional objects consisting of voxels and derive pass images for each pass of the print engine 2 over the print medium support surface 1 of the flatbed. A print medium 9 is supported on the print medium support surface 1 facing the print engine 2 during printing. The print system comprises the print engine 2 for applying colorants, in this embodiment cyan (C), magenta (M), yellow (Y), black (K) and white (W) colorant, to a flat print medium 9, the substrate, in order to obtain a printed object. In this embodiment a UV-curable material is applied by printheads that reciprocally scan the substrate in a movement direction X perpendicular to a transport direction Y by means of a gantry 7. A curing station is provided to solidify the marking material after printing on the substrate by exposing it to UV-radiation and/or UV light. The radiation preferably has a wavelength between or around 10 and 400 nm. Other types of marking materials or pre-treatment materials, such as primers, may further be applied within the present invention. It will further be appreciated that the present invention may be applied to any scanning inkjet printer, which includes a flatbed printer as shown in Fig. 1 as well as roll, web, sheet, rigid, and/or hybrid printers, wherein the print medium 9 is transported perpendicular to the scanning direction X, preferably between passes of the printheads. In another example, a stationary page-wide printhead array with parallel rows of printheads may be applied, so that the structures may be formed in a single pass as well. The curing station (not shown) may be incorporated in the same carriage as the printhead or be provided on a separate support. The curing station may be movable or entirely stationary.

Preferentially the distance between the flat substrate and the print elements that are used to apply the various colorants, is variable. This distance may be varied in order to keep the upper surface of the object within the latitude of the print elements. The latitude of the distance between a substrate of the scanning printhead is in print engine 2 about 0.5 to 2 mm.

The printer comprises a user interface (not shown), which is placed on the print engine, but which may also be part of the printer controller 8A, for selecting a print job and optionally adapt a print job parameter, such as an absolute height parameter for indicating a maximum height of the object to be printed. A maximum number of voxels in the height direction perpendicular to the substrate may be used as height parameter. A user interface may be provided as a network site that is accessible with a browser on a client computer.

After sending a print job comprising image data from a workstation to the printer controller, the print job will be made visible on the user interface. It may be scheduled for further processing after selection from a list of print jobs or, alternatively, if the print job is on top of the list of print jobs. The print job comprises parameter values that determine the way the image data are to be printed, such as the way how the image data are to be converted into print data.

### Inkjet printing of haptic structures

Figs. 2A to 2F illustrates different steps of a method to print haptic structures on a print medium 9. The print medium 9 is supported on the print medium support surface 1, such that a side of the print medium 9 faces the nozzles 12 of the printhead 11 during printing. The print medium 9 may be any suitable type of material(s), such as paper, plastic or metal foils, banners, sheets, rigids, webs, textiles, etc.

In Fig. 2A, the printhead 11 moves in its scanning direction X over the stationary print medium 9. The printhead 11 may be any suitable type of printhead, for example the printhead as described in US 10391768 B2. The nozzles 12 jet a plurality of droplets D of a UV-curable marking material onto the print medium 9. Each nozzle 12 is provided with a respective actuator (not shown) to jet a droplet D from said nozzle 12. Each actuator is controlled to jet its droplet D at a predetermined position P on the print medium 9. Therein, the relative position and velocity of each nozzle with respect to the respective position P has been taken into account. In Fig. 2A, during this pass of the printhead 11 each nozzle 12 jets a droplet D, such that these droplets D are positioned at a non-zero distance from one another on the print medium 9, as shown in Fig. 2B. It will be appreciated that the print medium 9 is Fig. 2A may have been treated with (pre)printing or processing prior to the step shown in Fig. 2A. For example, a primer and/or one or more initial layers of marking material may have been provided on the print medium 9 to provide a surface with suitable adhesion for the marking materials applied in Figs. 2A to 2C.

Fig. 2B shows that after jetting, the droplets D form spaced apart structures-in-formation S on the print medium 9 after deposition. The distance between the structures-in-formation S is sufficiently great, so that coalescence of neighboring structures-in-formation S is prevented. It will be appreciated that one or more droplets D may be deposited per position P per pass of the printhead 11 to contribute to the respective drop for forming the respective structure-in-formation S. Multiple droplets D deposited at the same position P during a single pass are deposited in close enough proximity, such that these coalesce together into a single drop. In Fig. 2B, the jetted droplets D of marking material are exposed to radiation from a curing station 14. The radiation, in this example UV light, triggers a photochemical reaction in the jetted marking material, which results in the hardening and fixation of the jetted droplets D. This process is commonly referred to as 'curing'. In Fig. 2B, the jetted droplets D were deposited directly on the print medium 9, so that by curing the jetted marking material the initial bases of the structures-in-formation S are hardened and fixed to the print medium 9, as shown in Fig. 2C.

In Fig. 2D, the printhead 11 passes over the print medium 9 during a second pass in the scanning direction X. The nozzles 12 are then activated again to jet further droplets D onto the cured, hardened bases of the structures-in-formation S. Based on the velocity and relatively position of a nozzle 12 with respect to a position P, a release timing is determined at which moment a droplet D is released from a respective nozzle 12, so that said droplet D lands on the structure-in-formation S at the intended position P. In a basic example, during every pass the relative position of a nozzle 12 with respect to the to be jetted position P is the same, while the velocity of the printhead 11 is kept constant. Corrections may be applied to compensate for the increasing height of the structures-in-formation S. As such, one or more droplets D of UV-curable marking material are deposited on top of the bases of the structures-information S. The amount of marking material deposited per position P, e.g. the number and/or (total) volume of droplets added per pass per structure-in-formation is preferably sufficiently small, so that the added marking material for its total or major part resides on top of the respective structure-in-formation S. Thereby, the height of the structures-in-formation S is increased incrementally.

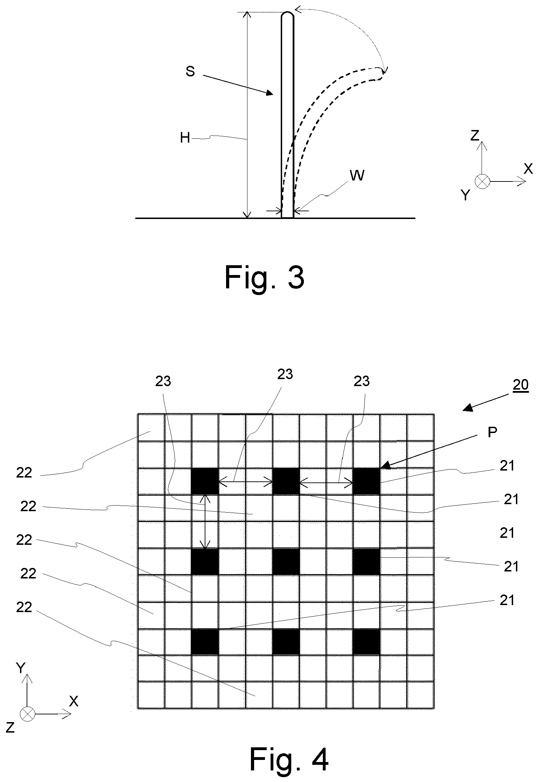

Subsequently, as shown in Fig. 2E, the added marking material is cured by means of the curing station 14. The droplets D added on top of each structure-in-formation S are hardened and fixed to the underlying bases, which were formed in Figs. 2A to 2C. This process of adding one or more droplets D to the top of each structure-in-formation S followed by curing the added marking material by means of UV radiation is then repeated a number of times to create three-dimensional, pillar-shaped structures S, as shown in Fig. 2F. The structures S extend out-of-plane in the heigh direction Z with respect to the print medium 9 and are spaced apart from one another in a substantially contactless manner. It will be appreciated that when a large number of structures is applied in a dense manner, local deviations may lead to a small number of structures being in contact with one another. The structures S provide a haptic sensation upon touch, as will be explained with reference to Fig. 3.

### Haptic structures

Fig. 3 illustrate a single structure S. The height H of the structure S in Fig. 3 is large compared to its cross-sectional width W parallel to the plane of the print medium 9. This elongated shape allows the structure S to be bent, as indicated by the dashed contour in Fig. 3. The cured marking material provides sufficiently elasticity to allow the structure S to be bent and revert back to its original shape, when the pressing force is removed. Providing a large number of such structures S in a dense configuration provides a haptic surface, with a touch sensation comparable to e.g. felt or leather. The reflectivity of the haptic surface is also significantly less than an entirely smooth surface formed of the same marking material(s). In the example of Fig. 3, the structure S is formed as a thin pillar or needle, which allows it to be bent in all directions X, Y parallel to the plane of the print medium 9. In another example, the structure 9 may be formed as a thin wall. The wall is (locally) able to bend in a direction perpendicular to largest surface of the wall. Thereby, a different optical look and/or haptic feel can be achieved.

In the example of Fig. 3, the structure S is formed of a single type of UV-curable marking material. The structure S was preferably formed using a marking material with a relatively high viscosity at room temperature. Preferably, the viscosity of the marking material is at least 100 mPa s, very preferably at least 200 mPa s, and even more preferably 500 mPa s at 20°C, as measured using an Anton Paar MCR 301 rheometer at shear rates (*γ̇*) of 100 s⁻¹. To facilitate easy jetting of the droplets D, the marking material may be heated before reaching the nozzles 12 of the printhead 11, such that the viscosity of the marking material is lowered, for example to less than 50 mPa s, preferably less than 20 mPa S, and even more preferably less than 10 mPa s in a temperature range between 45 and 60°C, at shear rates of 10 or 100 s⁻¹.

The marking material used for the structure S is preferably a gelling radiation curable inkjet ink. This ink comprises a gellant and a radiation curable component. Such an ink is described in e.g. US 10308825 B1 and/or WO 2007025893 A1 (which are herein incorporated by reference), specifically in the respective sections describing the composition of said inks. The gellant may in an embodiment be ester-based, while the radiation curable component may be of the group of epoxides and (meth)acrylates. (Meth-)acrylates may comprise one or more reactive groups for forming an acrylate polymer. An advantage of the gelling radiation curable inkjet ink is that the great increase in its viscosity as a droplet of it lands on the print medium or structures-in-formation. The gelling radiation curable inkjet ink is preferably heated upstream of the nozzles to facilitate transporting and jetting of the gelling radiation curable inkjet ink. After jetting, the droplets gelling radiation curable inkjet ink cool down rapidly, such that the gellant crystallizes into relatively small crystal domains. This results in a rapid and large boost in viscosity.

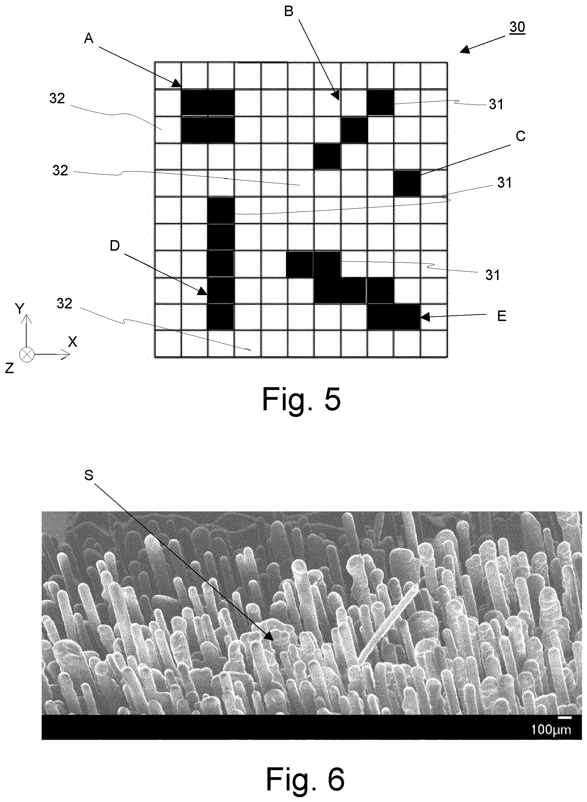

The height H and width W of the structures S may be selected in accordance with the composition of the marking material. The height/width ratio H/W may be varied to achieve different sensations of haptic feedback, as the elasticity of the structure S is in part determined by its relative width W. Dependent on the composition, a lower limit may be present for width W, below which the structures S are prone to breaking when pressed upon. Preferably, the height H of the structure S is at least multiple times its width W, preferably at least 10 times, very preferably at least 20 times, and very preferably at least 50 times. The width W is preferably less than 1 mm, very preferably less than 0.5 mm, even more preferably less than 250 µm. In the example shown Fig. 6, the structures S have a width W of roughly 35 µm ± 15 µm.

### Printing method

The structures S are formed by iteratively depositing a drop of one or more droplets D of a marking material on top of a structure-in-formation S and curing the deposited marking material before adding the next drop. This requires that the drops are deposited precisely on top of the structures-in-formation S. In a simple example this may be achieved by keeping the printhead 11 stationary to the print medium 9 with a narrow distance between. In another, more costs effective embodiment, the printhead 11 moves with respect to the print medium 9, such a relatively surface can be jetted by a single printhead 11. In a scanning inkjet printer 5, the printhead 11 moves reciprocally in the scanning direction X. Herein an example of a method for printing haptic structures on such a printer 1 will be described.

The process is initiated by the controller receiving haptic print job information, which triggers the printer 5 to be operated in a haptic structure printing mode when executing the corresponding print job. The haptic print job information defines in any suitable format a density of the structures S on the print medium 9 (e.g. numbers per unit area and/or a ratio of covered versus uncovered area), a height parameter for the structures (e.g. an average or maximum height in mm or µm), a marking material parameter (e.g. a color). A standard density may be applied in case no specific density is prescribed by the haptic print job information. It will be appreciated that multiple, different marking materials may be applied in combination to form a single structure S, but the current example will be explained with reference to a single marking material. Processing the haptic print job information results in the selection of a marking material. e.g. based on color. The controller has further stored for each marking material a droplet size parameter, corresponding to a volume of a droplet D of said marking material from a nozzle 12 of the printer 12. A value for the droplet size parameter may be determined by printing a haptic structure in a predetermined number of passes and dividing the final height of the structure by the number of passes and/or by measuring the drop volume or dimensions. The droplet size may vary dependent on other print process parameters, such as jetting speeds, temperature, etc. The controller may store a comprehensive look-up table which defines droplet height, sizes, and/or volumes across a variety of print process parameters. Additional, a cross-sectional dimension parameter for the structures S is determined or selected, for example a cross-sectional area or diameter measured perpendicular to the direction in which the height H is measured. The print job information may define a cross-sectional dimension parameter or the cross-sectional dimension parameter may follow from other process parameters. In the latter case, the cross-sectional dimension parameter may correspond to the area formed by a droplet D on the surface of the print medium 9, which has been previously determined and stored on the controller's memory.

The droplet size parameter is then compared to the height parameter to determine the number of passes of the printhead 11 for forming the structure S with the height H corresponding to the height parameter. Optionally, the controller may determine a number of individual droplets D which are deposited per pass onto a structure-in-formation S to together form a drop. In this example, a single droplet D will be jetted onto each structure-in-formation S during each pass (so each drop corresponds to a single droplet). The number of passes may then be determined by dividing the height H by a droplet height derived from the droplet volume or by calculating the volume of a structure using the cross-sectional dimension and height parameters and comparing that to the droplet size parameter. The determined number of passes is rounded to an integer value.

The controller further determines the printable area, which corresponds to the to-be-printed area of the print medium 9. The printable area is compared to the printer's resolution to determine a print mask 20, as illustrated in Fig. 4. The print mask 20 defines a pixel map, illustrated as a matrix in Fig. 4, wherein each pixel corresponds to an area of the print medium 9, e.g. roughly the area of an individual droplet on the print medium 9 (though shaped as a square). The darker printing pixels 21 correspond to areas where a droplet D is to be jetted during a pass of the printhead 11. The blank non-printing pixels 22 correspond to areas where no marking material is to be deposited during this pass. The distribution of printing pixels 21 corresponds in size and position to the structures S that are to be formed at the positions P. In Fig. 4, each printing pixel 21 defines a position P for forming a single structure S. In the example of Fig. 4, the printing pixels 21 are ordered in a square repeating pattern, but other patterns may be applied. For example for a realistic velvet-like haptic surface, a randomized geographical distribution may be applied, for example using a random number generator or a blue/white noise distribution.

In the example, in Fig. 4 the same print mask 20 is applied during each pass of the printhead 11 in the same direction. The printhead 11 scans in a forward, active direction X over the print medium 9 while jetting in accordance with the print mask 20. Droplets D are deposited at the position P, wherein each position P corresponds to a printing pixel 21. After jetting, the droplets D of jetted marking material are exposed to radiation R from the curing station 14. The jetted droplets D are thereby hardened into the bases of the structures-in-formation S. Parallel to and/or following the curing, the printhead 11 travels back in a reverse, passive direction opposite the active direction X, wherein the printhead 11 does not jet. After its return, the printhead 11 moves again in the forward, active direction X applying the same print mask 20. The droplets D are positioned at the same positions P, ensuring that the droplets D jetting during this pass land on top of the cured bases of the structures-in-formation S. Note that herein the printhead 11 is controlled to have the same or similar velocity during each forward pass. The controller may be configured to adjust for deviations in the velocity and or position of the printhead 11 during its forward pass by correcting the print mask 20. For example, in case the printhead velocity deviates to a lower value, the print mask 20 may be shifted opposite to the direction X of the printhead 11 to prevent the droplets D from overshooting their intended positions P. This print mask 20 is repeatedly applied again during each of the determined number of passes of the printhead 11,wherein the jetted marking material is cured between subsequent, forward passes. Every pass the structures-in-formation S are increased in height by a droplet D, which is cured and fixed to its underlying structure-in-formation S before a subsequent droplet D is added on top of it. During each or every certain number of passes, the controller may adjust the print mask to compensate for the height increase of the structures S. This may include shifting the print mask 20 opposite the direction of the printhead to compensate for the reducing distance between the top of the structures-in-formation S and the nozzles 12. Alternatively, the height and/or position of the printhead 11 may be adjusted as a corrective measure.

It will be appreciated that jetting of the printhead 11 may be applied during the forward and reverse motions of the printhead 11 as well. For example, a portion, e.g. half, of the printing pixels 21 in Fig. 4 may be consistently printed during the forward pass, while the remaining portion is printed during the reverse pass.

Fig. 5 illustrates a different print mask 30 that may be applied to generate haptic structures S, wherein structures S with different cross-sections are applied. In Fig. 5 most structures S are formed, such that their bases occupy multiple printing pixels 31. The area A for example is formed of four neighboring pixels that together form a square. In a single pass of the printhead 11 four droplets D are deposited close together in the area A to coalesce there into a drop. The coalesced marking material in area A is then cured to form the base of the structure-in-formation S in area A. The printhead 11 is then passed again over print medium 9, similar to as described with reference to Fig. 4. Four droplets D are then again jetted to their respective positions P in the area A. These droplets D land on top of the cured base of the structure-in-formation S, where they coalesce into a drop on top of the base. This drop of marking material is then cured again. The process is repeated to form a structure S having a cross-sectional width W of around two pixels instead of the single pixel structures S in Fig. 4. The structure S in area A has a different elasticity than the single pixel structure in area C, and provides a different haptic feedback.

Fig. 5 further illustrates other printing pixels grouped together to form walls in e.g. areas B, D, and E. The elasticity or flexibility of a wall can be controlled by (locally) adjusting the thickness of the respective and/or how the droplets are allowed to coalesce. In the wall in area B will be slightly easier to deform than the one in area D. The wall in area in comparison is relatively rigid. Walls also create a different haptic feel dependent their direction. When swiping over the wall in area D in the X-direction, it will deform more easily than in the Y-direction. By controlling the elasticity or flexibility of a wall or pillar, different haptic sensation can be achieved. This allows for the imitation of different types of materials, such as velvet, felt, leather, etc.

An scanning electron microscopic image of the haptic structures S is shown in Fig. 6. These structures S were obtained by the process described for Fig. 4. It is seen that the structures S are needle-like or pillar-shaped formations that extend out of the plane of the print medium 9. The structures S extend substantially parallel to one another with a certain variation caused by the physics of the printing process. The majority of the structures S are spaced apart from one another. The residual shape of the individual droplets D can still be seen in some the structures S. The structures S shown here were obtained by using the commercially available Canon UVgel 460 ink. A hundred passes were applied to deposit droplets on top of each other, wherein the droplets were cured every pass by a UV light source trailing the printheads. Printing was conducted mono-directionally with the same carriage velocity every pass. The temperature of the print surface was controlled to be 24°C. The print mode droplets was 300 x 900 dpi with 50% coverage per pass (50% possible voxels). The same halftone mask was applied every printing pass.

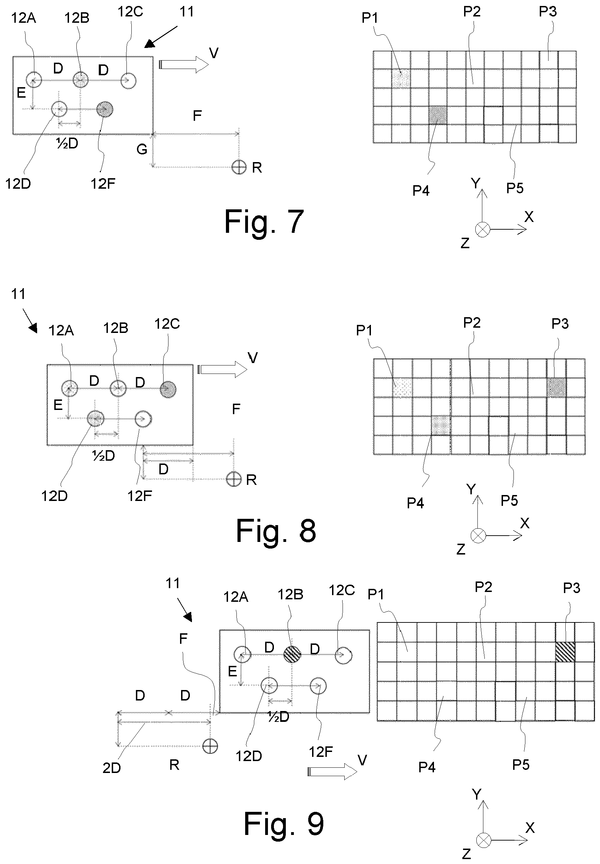

Different nozzles 12 and marking materials may be applied to form a single structure S, as illustrated in Figs. 7 to 9. The printhead 11 holds a plurality of nozzles 12A-E, five of which are illustrated in Fig. 7. Each nozzle 12A-E provides droplets D of a different type of UV curable marking material. The nozzles 12A-E are distributed over different rows. The rows in Fig. 7 are illustrated as being part of a single printhead 11, but multiple rows may also be formed by providing multiple printheads 11 on a common carriage. The printhead 11 is moved in the scanning direction X with a constant velocity V. When the printhead 11 is at a predetermined distance F from a predetermined reference point R, the second nozzle 12B jets a droplet D, causing it to land at position P1. The reference R may be a point on the print medium 9 or on its support surface. In practice, the reference R is selected such that the printed image is aligned and positioned with respect to one or more edges of the print medium 9. Simultaneously, the fifth nozzle 12E is activated to jet a droplet D, which lands at position P4. The landing positions P2, P4 of the droplets D are determined by the distance F, the velocity of the printhead 11, and the vertical spacing between the nozzles 12A-E and the print medium 9 in the height direction Z. Immediately after landing, the droplets D in positions P2, P4 are cured by exposure to UV radiation, for example by having the curing station 14 mounted on and/or following the printhead carriage.

In Fig. 8, the printhead 11 has been moved a distance D closer to the reference R in the scanning direction X and remains to move with the constant velocity V. The distance D here is equal to the distance between neighboring nozzles 12A-E in the scanning direction X. The first, third, and fourth nozzles 12A, 12C, 12D then jet droplets D on the respective positions P1, P3, P4. In the first and fourth position P1, P4 a droplet D lands on a previously cured droplet, thereby forming a structure-in-formation S consisting of different marking materials. The third position P3 in contrast receives its first droplet D, which lands on the print medium 9. Again, the droplets D are cured quickly after landing.

In Fig. 9, the second nozzle 12B is used to jet a droplet D onto the third position P3 after the printhead 11 has moved another distance D (and continues to move at the velocity V). The printhead 11 has traveled distance 2D closer to the reference R with respect to Fig. 7. The droplet D jetted in Fig. 9 lands on the previously cured droplet D in the third position P3. The droplet D is rapidly cured, so that it forms as a solid blob on top of the previously cured droplet D. The direction of the printhead 11 is then reversed, returned to the position in Fig. 7, and the steps in Figs. 7 to 9 are repeated to form structures S formed of different marking materials. It will further be appreciated that a larger surface may be printed when allowing the print medium 9 to further be moved with respect to the printhead 11 in the direction Y perpendicular to the scanning direction X. Therein, the adjacent printheads 12A-E are displaced by a distance E in the Y-direction and a distance ½D in the X-direction. These displacements are taken into account when moving the printhead 11 with respect to the print medium in the Y-direction as well. This two-directional displacement may be performed on a flatbed printed, wherein the print medium 9 is stationary and the printhead 11 moves both in the X and Y directions., and/or on a transporting, scanning printer, wherein the print medium is moved stepwise or continuously in the Y-direction, while the printhead 11 scans in the X-direction.

Although specific embodiments of the invention are illustrated and described herein, it will be appreciated by those of ordinary skill in the art that a variety of alternate and/or equivalent implementations exist. It should be appreciated that the exemplary embodiment or exemplary embodiments are examples only and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

It will also be appreciated that in this document the terms "comprise", "comprising", "include", "including", "contain", "containing", "have", "having", and any variations thereof, are intended to be understood in an inclusive (i.e. non-exclusive) sense, such that the process, method, device, apparatus or system described herein is not limited to those features or parts or elements or steps recited but may include other elements, features, parts or steps not expressly listed or inherent to such process, method, article, or apparatus. Furthermore, the terms "a" and "an" used herein are intended to be understood as meaning one or more unless explicitly stated otherwise. Moreover, the terms "first", "second", "third", etc. are used merely as labels, and are not intended to impose numerical requirements on or to establish a certain ranking of importance of their objects.

The present invention being thus described, it will be obvious that the same may be varied in many ways. Such variations are not to be regarded as a departure from the spirit and scope of the present invention, and all such modifications as would be obvious to one skilled in the art are intended to be included within the scope of the following claims.

## Claims

1. A method of inkjet printing a haptic surface on a print medium (9), the method comprising the steps of:
- depositing radiation curable marking material on a surface, such that an array of spaced apart drops is formed;
- curing said spaced apart drops by irradiating the drops ;
- forming the drops into a plurality of spaced apart, out-of-plane structures (S) by repeatedly depositing a further drop of radiation curable marking material on each drop and curing the further drops, thereby adhering the further drops to the drop, wherein each repetition increases a height of the structures (S) with respect to the surface.

2. The method according to claim 1, wherein each further drop is deposited and cured on a previous drop, such that a majority, and preferably all of the marking material of the further drop is adhered on top of the previous drop.

3. The method according to any of previous claims, wherein upon completion the structure (S) has a height with respect to the plane, which height is at least multiple times, preferably at least ten times, greater than a cross-sectional width (W) of the structure (S) taken parallel to the plane, and preferably wherein the height (H) is at least multiple times, preferably at least ten times, a square root of a cross-sectional area of the structure (S) parallel to the plane.

4. The method according to any of the previous claims, wherein upon completion each structure (S) is a pillar formed by drops stacked on top of another, wherein each pillar is positioned substantially free from other pillars.

5. The method according to any of the previous claims, wherein the radiation curable marking material comprises a gellant, which provides sufficient viscosity to the drops to allow the uncured further drop to be positioned on a previous drop without a majority of the marking material of the drop flowing down onto and/or past the previous drop.

6. The method according to claim 5, wherein the marking material further comprises an UV-initiator and a colorant, and wherein the curing step comprises irradiating the drops with UV-radiation.

7. The method according to any of the previous claims, wherein the step of forming the drops comprising jetting at least one droplet (D) of UV curable marking material from a nozzle (12 12A-12E) of a printhead (11), and wherein the method further comprises the step of positioning a nozzle (12, 12A-12E) of a printhead (11) with respect to a to be formed structure (S), such that the nozzle (12, 12A-12E) is in a similar and/or the same jetting position with respect to the to be formed structure (S) every time a droplet (D) from said nozzle (12, 12A-12E) is jetted onto the to be formed structure (S).

8. The method according to claim 7, wherein the respective nozzle (12, 12A-12E) further has a similar and/or the same velocity (V) and moving direction with respect to the to be formed structure (S) every time a droplet (D) from said nozzle (12, 12A-12E) is jetted onto the to be formed structure (S).

9. The method according to claim 8, further comprising the step of scanning the printhead (11) iteratively over the plane, wherein the step of curing comprises irradiating the droplets (D) when the printhead has (11) moved away from the droplets (D).

10. The method according to any of the claims 7 to 9, wherein a volume of each individual droplet (D) is less than 100 pl, preferably less than 50, and very preferably less than 20 pl.

11. The method according to any of the claims 7 to 10, where a time between jetting a droplet and curing a droplet (D) is less than 1 s, preferably less than 0.5 s, very preferably less than 250 ms, and even more preferably less than 150 ms.

12. The method according to any of the previous claims, further comprising the steps of:
- selecting a structure height parameter corresponding to a height of the structures (S) after printing;
- comparing a droplet size parameter corresponding to a dimension of the be applied droplets to the structure height parameter to determine a number of passes;
- defining a number of masks at least equal to the number of passes of a scanning printhead, wherein each mask defines a plurality of spaced apart structure formation area, each structure formation area comprises at least one printing pixel and said structure formation area is surrounded by non-printing pixels, preferably wherein the masks are identical; and
- applying one of the mask per pass.

13. A scanning inkjet printer comprising:
- a translatable printhead carriage (2) translatable over a medium support surface (10) and comprising at least one printhead (11) comprising nozzles (12, 12A-12E) for jetting droplet of UV curable marking material onto a print medium (9) on the medium support surface (10);
- a curing station (14) configured for emitting UV radiation for curing marking material on the print medium (9) on the medium support surface (10);
- a controller configured for operating in a haptic structure print mode to:
- define a plurality of spaced apart structure formation areas on the print medium (9) with respect to the medium support plane (10);
- control the printhead (11) to jet at least one droplet (D) from the at least one nozzle (12, 12A-12E) onto each structure formation area during multiple passes of the printhead (11), wherein for every droplet (D) jetted onto a structure formation area, the position, velocity, and moving direction of each nozzle (12, 12A-E) with respect to a structure formation area when jetting a droplet (D) in said structure formation area are similar and/or the same, and to control the curing station (14) to cure the jetted droplets (D) during each pass of the printhead (11), such that in substantially each structure formation area a three-dimensional structure (S) is formed, the structures (S) being spaced apart from one another and comprising a cross-sectional width (W) that is sufficiently small compared to their height (H) to allow the structures (S) to bend with respect to the print medium (9).

14. A computer program comprising instructions which, when the program is executed by a computer, cause the computer to carry out the steps of the method of any of the claims 1 to 12.

15. A print medium with a haptic surface formed by performing the method according to any of the claims 1 to 12.
